# EUROPÄISCHE PATENTSCHRIFT

(11) **EP 3 874 930 B1**
(45) Veröffentlichungstag und Bekanntmachung des Hinweises auf die Patenterteilung: **09.04.2025**
(21) Anmeldenummer: 21401010.0
(22) Anmeldetag: 01.03.2021
(51) Int. Cl.: A01C 5/06

(54) **ANDRUCKROLLE FÜR EIN LANDWIRTSCHAFTLICHES ARBEITSGERÄT**
PRESSURE ROLLER FOR AN AGRICULTURAL WORKING DEVICE
ROULEAU DE PRESSION POUR UN APPAREIL DE TRAVAIL AGRICOLE

(30) Priorität: 02.03.2020 DE 102020105443
(43) Veröffentlichungstag der Anmeldung: 08.09.2021
(73) Patentinhaber: Amazonen-Werke H. Dreyer GmbH & Co. KG, 49205 Hasbergen-Gaste (DE)
(72) Erfinder: Johannaber, Stefan Jan, 49536 Lienen (DE); Wiebusch, Thorsten, 49205 Hasbergen (DE); Breuer, Jan Henrik, 48231 Warendorf (DE)

(56) Entgegenhaltungen:
- EP-A1- 2 386 197
- EP-A1- 2 982 229
- WO-A1-2019/092188
- DE-A1- 102015 008 704
- DE-U1- 202009 000 721

## Beschreibung

Die Erfindung betrifft eine Andruckrolle für ein landwirtschaftliches Arbeitsgerät gemäß dem Patentanspruch 1 und ein landwirtschaftliches Arbeitsgerät gemäß dem Oberbegriff des Patentanspruches 13.

In einer Vielzahl von Anwendungsfällen innerhalb der Landwirtschaft werden landwirtschaftliche Arbeitsgeräte, insbesondere Verteilmaschinen, zum Ablegen von körnigem Gut, insbesondere Saatgut und/oder Dünger, auf einer landwirtschaftlichen Fläche, insbesondere einem Ackerboden, eingesetzt. Das landwirtschaftliche Arbeitsgerät umfasst hierbei üblicherweise zumindest einen Vorratsbehälter von dem das körnige Gut über ein, insbesondere pneumatisches, Fördersystem zu mehreren quer zu einer Fahrtrichtung angeordneten Scharen, insbesondere Doppelscheibenscharen, zuführbar ist. Das körnige Gut ist hierbei im Bereich der Schare auf der landwirtschaftlichen Fläche, insbesondere innerhalb einer vom Schar verursachten Furche, ablegbar. Darüber hinaus umfasst das landwirtschaftliche Arbeitsgerät zumindest eine in Fahrtrichtung hinter jeweils einem Schar angeordnete Andruckrolle. Die Andruckrolle ist hierbei dazu eingerichtet, dass ablegbare körnige Gut, insbesondere zur Stabilisierung eines einzelnen Korns und/oder für eine verbesserte Keimung, mittels einem umlaufenden Andruckelements zumindest teilweise auf der landwirtschaftlichen Fläche, insbesondere innerhalb der Furche, anzudrücken.

Um ein Anhaften von Verschmutzungen, beispielsweise in Form von feuchtem Ackerboden, auf derartigen Andruckrollen möglichst zu vermeiden, wird im Stand der Technik ein sogenannter selbstreinigender Walkeffekt der Andruckrolle ausgenutzt. Zum Ausführen eines solchen Walkeffektes bedarf es bisher typischerweise eine aus zumindest einem elastischen Material ausgebildeten Andruckrolle, die eine zumindest teilweise Verformung der Andruckrolle, insbesondere des elastischen Materials, infolge einer, insbesondere radialen und/oder axialen, Belastung erlaubt. Als elastisches Material wird üblicherweise Gummi und/oder, insbesondere weicher, Kunststoff verwendet.

Des Weiteren umfassen derartige Andruckrollen alternativ oder zusätzlich zumindest einen radial an dem Andruckelement angeordneten Abstreifer. Der Abstreifer ist hierbei dazu eingerichtet, an dem Andruckelement, insbesondere innerhalb eines Kontaktbereiches zwischen dem Andruckelement und der landwirtschaftlichen Fläche, anhaftende Verschmutzungen zumindest teilweise zu entfernen.

Eine derartige Andruckrolle ist aus der EP 3 207 784 B1 bekannt. Die Andruckrolle umfasst hierbei wenigstens einen drehbar gelagerten, insbesondere inneren, Nabenkörper und wenigstens einen den Nabenkörper zumindest teilweise umschließenden Mantel. Der Mantel ist dabei zumindest nahezu drehfest mit dem Nabenkörper verbunden. Darüber hinaus schließt ein im Wesentlichen formstabiles radial umlaufendes, insbesondere kreisringförmiges, Andruckelement zumindest teilweise an den Mantel an.

Nachteilig an diesem Aufbau ist unter anderem, dass die Seitenstabilität der Andruckrolle durch im Wesentlichen axial wirkende Belastungen auf die Andruckrolle, insbesondere bei Kurvenfahrten auf der landwirtschaftlichen Fläche, besonders stark eingeschränkt ist. Eine, insbesondere in axialer Richtung, zumindest teilweise verformbare Andruckrolle weist außerdem den Nachteil auf, dass die Andruckrolle zumindest teilweise an einem abgelegten Korn des körnigen Gutes und/oder aus einer Furche heraus vorbei geführt und dabei das Korn nicht optimal angedrückt werden kann.

Eine weitere Form einer Andruckrolle ist in der WO 2017/071692 A1 beschrieben. Diese offenbart eine Andruckrolle die ein zumindest teilweise verformbares Andruckelement aufweist das über zumindest ein, insbesondere aus dem gleichen Material ausgebildeten, Stegelement mit dem Nabenkörper verbunden ist.

Zusätzlich umfasst die Andruckrolle zumindest einen zwischen dem Andruckelement und der Nabe, insbesondere das Stegelement umschließenden, Füllstoff. Der Füllstoff ist hierbei, insbesondere zum Erreichen des Walkeffektes, besonders weich und verformbar ausgebildet. Ferner ist eine Andruckrolle mit einem innen liegenden Stegelement aus der DE 10 2015 121 083 A1 bekannt. Das Stegelement steht hierbei mit dem Mantel, der gleichzeitig auch das Andruckelement bildet, in Kontakt und ist hierbei durch eine äußere Belastung zumindest teilweise gemeinsam mit dem Mantel, insbesondere Andruckelement, verschiebbar. Mittels des an dem Mantel, insbesondere Andruckelement, anliegenden Stegelementes ist eine Art Vorspannung des Mantels erreichbar. Nachteilig an diesen Lösungen ist das durch das, insbesondere verformbare, Stegelement und/oder das Andruckelement die Seitenstabilität und/oder Formstabilität der Andruckrolle in axialer Richtung eingeschränkt ist. Des Weiteren haben sich derartig ausgebildete Andruckelemente, insbesondere aufgrund ihrer geringen äußeren Härte, als ungeeignet bei der Verwendung von Abstreifern erwiesen.

Ferner erfordern die aus dem Stand der Technik bekannten Andruckrollen, insbesondere mit einem aus im Wesentlichen formstabilen Material ausgebildeten Stegelement und/oder Andruckelement, zum Ausweichen von Unebenheiten und/oder Hindernissen eine, insbesondere nach Art einer Überlastsicherung und/oder einem Federsystem ausgebildete, besonders aufwändige Ankopplung an dem landwirtschaftlichen Arbeitsgerät. Die zusätzliche Ankopplung schafft hierbei einen Freiheitsgrad und somit eine in radialer Richtung verschiebbare Andruckrolle.

Darüber hinaus ist aus der Druckschrift DE 20 2009 000721 U1 eine Andruckrolle bekannt geworden, bei welcher die Andruckrolle zwischen dem Nabenkörper und dem Andruckelement zumindest ein Führungselement aufweist. Das Führungselement und das Andruckelement sind dabei, insbesondere in radialer Richtung, zueinander verschiebbar. Eine weitere Andruckrolle ist aus der DE 10 2015 008704 bekannt. Schließlich, ein Tiefenführungsrad mit einem Abdeckelement ist aus der WO 2019/092188 A1 bekannt.

Die der Erfindung zugrunde liegende Aufgabe besteht darin, eine Andruckrolle so zu gestalten, dass die Formstabilität, insbesondere in axialer Richtung, und die Selbstreinigung der Andruckrolle weiter gesteigert und die Andruckrolle dabei vorzugsweise besonders einfach mit einem landwirtschaftlichen Arbeitsgerät koppelbar ist. Der Erfindung liegt ferner die Aufgabe zu Grunde ein landwirtschaftliches Arbeitsgerät mit einer Andruckrolle anzugeben.

Diese Aufgabe wird erfindungsgemäß durch die Merkmale des Anspruch 1 gelöst. Im Hinblick auf das landwirtschaftliche Arbeitsgerät wird die Aufgabe durch den Gegenstand des Anspruches 13 gelöst.

Die Erfindung macht sich die Erkenntnis zunutze, dass durch ein zumindest teilweises Verschieben in radialer Richtung zumindest zweier Komponenten der Andruckrolle ein Walkeffekt der Andruckrolle erreichbar ist. Die Ausprägung des Walkeffektes ist dabei vom Grad der, insbesondere relativ, zueinander ausführbaren Verschiebung abhängig. Erfindungsgemäß erlaubt das zumindest eine Führungselement eine besonders große, insbesondere geführte, Verschiebung der Komponenten zueinander.

Darüber hinaus ist hierüber ein Freiheitsgrad in vertikaler Richtung innerhalb der Andruckrolle geschaffen, der die Ankopplung zwischen der Andruckrolle und dem landwirtschaftlichen Arbeitsgerät besonders vereinfacht. Die im Stand der Technik verwendeten Federsysteme, insbesondere Überlastsicherungen, die besonders verschleiß- und/oder reparaturanfällig sind, sind mit einer derartig ausgebildeten Andruckrolle nicht mehr notwendig.

Ferner ist hierüber ein Abstand zwischen dem Führungselement und der Lauffläche der Andruckrolle, insbesondere des Andruckelementes, in Abhängigkeit der äußeren Belastung veränderbar. Somit resultiert bei einer großen Belastung ein kleinerer Abstand und bei einer kleinen Belastung ein größerer Abstand vom Führungselement zur Lauffläche.

In einer bevorzugten Ausführungsform der erfindungsgemäßen Andruckrolle ist das Führungselement starr, insbesondere drehfest, mit dem Nabenkörper gekoppelt. Der Nabenkörper ist bevorzugt über zumindest einen Halter und/oder eine drehbare Lagerung mit einem Rahmen des landwirtschaftlichen Arbeitsgeräts gekoppelt. Somit ist der Nabenkörper, insbesondere während eines Abrollens der Andruckrolle auf der landwirtschaftlichen Fläche, um eine im Wesentlichen quer zur Fahrtrichtung ausgerichtete Achse drehbar gelagert. Mittels der drehfesten Kopplung zwischen dem Nabenkörper und dem Führungselement ist somit ebenso das Führungselement um die horizontale Achse drehbar gelagert. Das Führungselement ist hierbei bevorzugt form- und/oder kraftschlüssig und/oder stoffschlüssig mit dem Nabenkörper verbindbar. Alternativ oder zusätzlich kann das Führungselement am Nabenkörper angeformt oder angeschraubt sein. Des Weiteren ist der Nabenkörper derartig innerhalb der Andruckrolle angeordnet, dass das Andruckelement, insbesondere in einer Ausgangsposition, konzentrisch zum Nabenkörper, ausgerichtet ist. Das Führungselement ist hierbei dazu eingerichtet, den Nabenkörper zum Andruckelement, insbesondere in radialer Richtung und/oder infolge einer Belastung der Andruckrolle, zumindest teilweise zu verschieben und/oder zu führen. Hierdurch ist eine in axialer Richtung besonders formstabile Andruckrolle geschaffen die ein Einfedern, insbesondere ein Walken, der Andruckrolle in radialer Richtung erlaubt und somit einen Selbstreinigungseffekt auslöst.

In einer Weiterbildung der erfindungsgemäßen Andruckrolle ragt das Führungselement zumindest teilweise in und/oder um das Andruckelement, wobei das Andruckelement durch das Führungselement, insbesondere in axialer Richtung, zwangsgeführt ist. Das Andruckelement weist hierbei bevorzugt zumindest einen Vorsprung auf der zumindest teilweise vom Führungselement umschließbar ist. Alternativ oder zusätzlich ist der Vorsprung des Andruckelementes derartig ausgebildet, dass das Führungselement zumindest teilweise hineinragt. Der Vorsprung ist hierbei vorzugsweise an dem Andruckelement angeformt und/oder mit dem Andruckelement stoffschlüssig verbunden. Mittels dieser Ausführungsform sind das Andruckelement und/oder der Nabenkörper zumindest nahezu ausschließlich in radialer Richtung zueinander verschiebbar, woraus eine besonders betriebssichere Andruckrolle resultiert.

In einer anderen bevorzugten Ausführungsform der erfindungsgemäßen Andruckrolle ist das Führungselement zumindest teilweise scheibenförmig ausgebildet. Das Führungselement erstreckt sich hierbei bevorzugt zumindest nahezu vollständig um den Nabenkörper und ist dabei, insbesondere in axialer Richtung, besonders steif und/oder belastbar ausgebildet. Das Führungselement ist somit besonders platzsparend ausgebildet, womit außerdem eine besonders schlanke Andruckrolle, insbesondere mit einem besonders großen Verhältnis vom Durchmesser zur Breite, erreichbar ist. Ferner ist alternativ oder zusätzlich zur Gewichteinsparung der Andruckrolle zumindest ein Ausschnitt, sind vorzugsweise mehrere Ausschnitte, innerhalb der des Führungselementes vorgesehen.

In einer anderen Weiterbildung der erfindungsgemäßen Andruckrolle ist das Führungselement zumindest teilweise speichenartig ausgebildet. Bei dieser Ausführungsform sind mehrere Führungselemente auf dem Umfang des Nabenkörpers verteilt angeordnet, wobei sich die Führungselemente zumindest teilweise vom Nabenkörper in Richtung des Andruckelements erstrecken. Die Führungselemente weisen hierbei jeweils bevorzugt die Form einer zumindest teilweise eckigen Speiche auf, wobei die Breite und/oder Höhe bevorzugt ein Vielfaches größer ist als die Dicke der Speiche. Alternativ oder zusätzlich kann das Führungselement, insbesondere die Speiche, zumindest teilweise kreisförmig ausgebildet sein. Mit dieser Ausführungsform ist eine besonders stabile und dabei gleichzeitig besonders gewichteinsparende Andruckrolle erreichbar.

In einer weiteren bevorzugten Ausführungsform der erfindungsgemäßen Andruckrolle ist das Führungselement im Wesentlichen formstabil, insbesondere aus einem metallischen Material und/oder aus Kunststoff, ausgebildet. Ein zumindest teilweise aus metallischem Material ausgebildetes Führungselement ist dabei besonders formstabil und/oder einfach zu verarbeiten, so dass das Führungselement besonders einfach mit dem Andruckelement und/oder dem Nabenkörper verbindbar ist. Ein zumindest teilweise aus einem Kunststoff, beispielsweise einem Verbundwerkstoff, ausgebildetes Führungselement weist dabei ein besonders geringes Gewicht mit hoher Formstabilität auf. Alternativ oder zusätzlich sind hierbei weitere Materialien wie Keramik denkbar. Das Führungselement ist hierbei derartig innerhalb der Andruckrolle angeordnet und/oder ausgebildet, dass die Andruckrolle, insbesondere in axialer Richtung, zumindest im Wesentlichen formstabil ausgebildet ist. Mittels dieser Ausführungsform ist die Betriebssicherheit der Andruckrolle, insbesondere des Führungselementes, noch weiter gesteigert.

Darüber hinaus ist eine erfindungsgemäße Andruckrolle bevorzugt bei der das Andruckelement zumindest teilweise aus einem metallischen Material und/oder aus einem Verbundwerkstoff ausgebildet ist. Das Andruckelement weist hierbei eine besonders hohe Formstabilität, insbesondere Härte, auf. Darüber hinaus ist die auf der landwirtschaftlichen Fläche, insbesondere dem Ackerboden, abrollbare Oberfläche des Andruckelements bevorzugt zumindest nahezu nahtlos ausgebildet. Ferner umfasst das landwirtschaftliche Arbeitsgerät, insbesondere die Andruckrolle, zumindest einen Abstreifer der dem Andruckelement, insbesondere der Oberfläche des Andruckelementes, zugordnet ist. Mittels des Abstreifers sind Anhaftungen, insbesondere in Form von Verschmutzungen, auf dem Andruckelement besonders gut abtragbar bzw. entfernbar. Ferner ist das Abtragen bzw. Entfernen von Verschmutzungen durch eine alternativ oder zusätzlich geschliffene und/oder polierte Oberfläche des Andruckelementes verbessert.

In einer anderen bevorzugten Ausführungsform der erfindungsgemäßen Andruckrolle sind der Nabenkörper und/oder das Führungselement und/oder der Mantel jeweils mehrteilig, vorzugsweise zweiteilig, ausgebildet. Die Einzelteile sind hierbei jeweils für sich und/oder zumindest teilweise untereinander form- und/oder kraftschlüssig, insbesondere mittels zumindest einer Schraubverbindung, miteinander verbindbar. Die Verbindung ist hierbei bevorzugt reversibel, insbesondere zerstörungsfrei, lösbar ausgebildet. Somit sind die Eizelteile der Andruckrolle zu Wartungs- und/oder Instandsetzungszwecken besonders gut zugänglich und/oder austauschbar. Ferner ist hierdurch erreicht, dass die Andruckrolle auf unterschiedliche Bedingungen, insbesondere auf der landwirtschaftlichen Fläche, anpassbar ist. Hierfür kann es beispielsweise sinnvoll sein für einen eher trockenen und/oder harten Ackerboden steifere Materialien oder bei feuchten und/oder weichen Ackerböden elastischere Materialien innerhalb der Andruckrolle zu verwenden.

In einer weiteren besonders bevorzugten Weiterbildung der erfindungsgemäßen Andruckrolle ist der zumindest eine Mantel form- und/oder kraft- und/oder stoffschlüssig, insbesondere drehmomentübertragend, mit dem Andruckelement und/oder dem Nabenkörper verbunden. Eine als Klebeverbindung ausgebildete stoffschlüssige Verbindung zwischen dem Mantel und dem Nabenkörper und/oder dem Andruckelement ist hierbei besonders bevorzugt. Alternativ oder zusätzlich ist eine Ausführungsform denkbar, bei der der Mantel zumindest teilweise mittels zumindest einer Schraubverbindung mit dem Andruckelement verbindbar ist. Das Drehmoment ist hierbei zumindest nahezu ausschließlich oder zusätzlich über den Mantel zwischen dem Andruckelement und dem Nabenkörper übertragbar.

Ferner ist eine erfindungsgemäße Andruckrolle bevorzugt bei der das Drehmoment alternativ oder zusätzlich zwischen dem Andruckelement und dem Führungselement übertragbar ist. Hierbei sind beispielsweise Mitnehmer und/oder Stiftelemente denkbar, die ein unmittelbares und/oder zumindest teilweise verzögertes übertragen des Drehmomentes erlauben. Darüber hinaus ist hierbei der Einsatz von zusätzlichen Federelementen denkbar, die ein weicheres ein**-** und/oder ausleiten des Drehmomentes zwischen dem Andruckelement und dem Führungselement erlauben. Mittels dieser Ausführungsform ist zum einen ein besonders großes Drehmoment zwischen dem Andruckelement und dem Nabenkörper übertragbar und zum anderen der Mantel der Andruckrolle zumindest teilweise entlastbar.

Bei einer weiteren besonders bevorzugten Ausführungsform der erfindungsgemäßen Andruckrolle bildet das Andruckelement zumindest teilweise im Querschnitt gesehen ein, insbesondere U- und/oder T-, Profil aus. Das Profil kann hierbei im Querschnitt zumindest teilweise hohl und/oder aus einem Vollmaterial gebildet sein. Ein als U-Profil ausgebildetes Andruckelement weist zum einen eine im Wesentlichen waagerechte erste Oberfläche und zum anderen an den Seiten winklig dazu abstehende Schenkel auf. Die Schenkel sind hierbei bevorzugt zumindest teilweise umformbar. Bei einem als T-Profil ausgebildeten Andruckelement ist eine erste Oberfläche im Wesentlichen waagerecht ausgebildet, wobei ein sich in radialer Richtung nach innen erstreckender Vorsprung, vorzugsweise mittig, an der waagerechten Oberfläche angeformt ist. Alternativ sind hierbei auch zumindest teilweise polygonförmige, insbesondere mehreckige, und/oder kreisförmige und/oder L-förmige Profile denkbar. Ein profilförmig ausgebildetes Andruckelement weist dabei ein besonders geringes Gewicht bei hoher Stabilität, insbesondere in axialer Richtung, auf.

Bei einer weiteren vorteilhaften Ausführungsform der erfindungsgemäßen Andruckrolle umfasst die Andruckrolle zumindest ein Stützorgan, das zwischen dem zumindest einen Führungselement und dem Andruckelement angeordnet ist, wobei das Stützorgan form- und/oder kraftschlüssig, insbesondere mittels einer Klemmverbindung, mit dem zumindest einen Mantel und/oder dem Andruckelement verbunden ist. Besonders bevorzugt ist ein zumindest teilweise scheibenförmig ausgebildetes, vorzugsweise formstabiles, Stützorgan. Das Stützorgan ist hierbei bevorzugt zumindest teilweise aus einem metallischen und/oder keramischen Material und/oder einem Kunststoff, insbesondere Verbundwerkstoff, ausgebildet. Ferner ist ein Stützorgan besonders bevorzugt, dass auf einer ersten Seite zumindest teilweise in das Führungselement eingreift und/oder vom Führungselement umschlossen ist und auf einer zweiten Seite, vorzugsweise drehmomentübertragend, mit dem Andruckelement verbunden ist.

In der erfindungsgemäßen Andruckrolle ist das Führungselement, insbesondere in axialer Richtung, zumindest teilweise von dem zumindest einen Mantel umschlossen. Somit ist das Führungselement und/oder weitere innerhalb der Andruckrolle angeordnete Komponenten besonders gut vor äußeren Einflüssen und/oder Verschmutzungen geschützt. Aufgrund der elastischen Materialeigenschaften des Mantels sind die Verschmutzungen von der Oberfläche der Andruckrolle, insbesondere des Mantels, besonders gut abweisbar. Ferner ist hierüber die Selbstreinigung der Andruckrolle noch weiter gesteigert.

In einer weiteren Weiterbildung der erfindungsgemäßen Andruckrolle ist zwischen dem Führungselement und dem Andruckelement zumindest ein Federelement angeordnet. Das zumindest eine Federelement kann hierbei aus einem besonders elastischen Material und/oder in Form einer Schraubenfeder ausgebildet sein. Alternativ oder zusätzlich ist zumindest ein Federelement zwischen dem Führungselement und dem Nabenkörper denkbar. Über das zumindest eine Federelement ist eine besonders hohe und/oder variable Federsteifigkeit der Andruckrolle erreicht.

Die der Erfindung zugrunde liegende Aufgabe wird ferner innerhalb eines landwirtschaftlichen Arbeitsgeräts der eingangs genannten Art gelöst, wobei die Andruckrolle nach zumindest einem der vorstehenden beschriebenen Ausführungsformen ausgebildet ist. Hinsichtlich der Vorteile und Modifikationen des erfindungsgemäßen landwirtschaftlichen Arbeitsgeräts wird zunächst auf die Vorteile und Modifikationen der erfindungsgemäßen Andruckrolle verwiesen.

Weitere Einzelheiten der Erfindung sind der Beispielsbeschreibung und den Zeichnungen zu entnehmen. Die Zeichnungen zeigen
- Fig.1: ein als Verteilmaschine ausgebildetes landwirtschaftliches Arbeitsgerät mit einer ersten Ausführungsvariante einer erfindungsgemäßen Andruckrolle in Prinzipdarstellung;
- Fig.2A: die erste Ausführungsvariante der erfindungsgemäßen Andruckrolle in perspektivischer Teil-Explosionsdarstellung;
- Fig.2B: eine zweite Ausführungsvariante der erfindungsgemäßen Andruckrolle in perspektivischer Teil-Explosionsdarstellung;
- Fig.2C: eine dritte Ausführungsvariante der erfindungsgemäßen Andruckrolle in perspektivischer Teil-Explosionsdarstellung;
- Fig.3A: die Andruckrolle aus Fig.2A im Vollschnitt von vorne;
- Fig.3B: die Andruckrolle aus Fig.2B im Vollschnitt von vorne; und
- Fig.3C: die Andruckrolle aus Fig.2C im Vollschnitt von vorne.

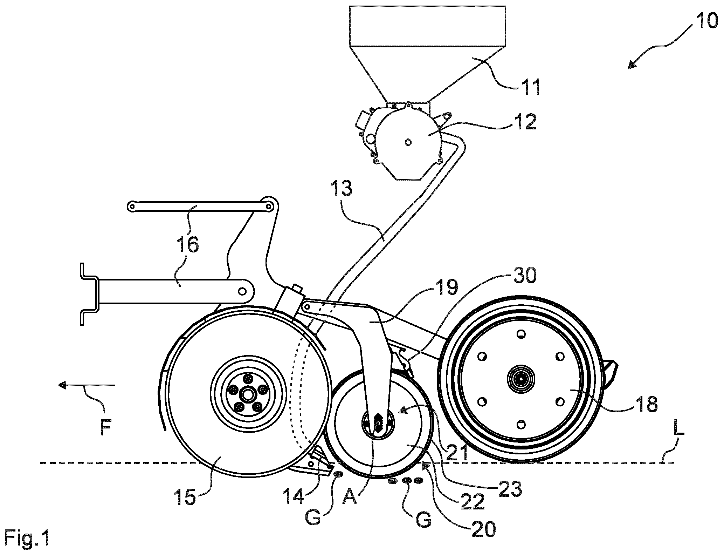

Eine erste Ausführungsvariante der erfindungsgemäßen Andruckrolle 20 an einem als Verteilmaschine, insbesondere Einzelkornsämaschine, ausgebildeten landwirtschaftlichen Arbeitsgerät 10 zum Ausbringen von körnigem Gut G, insbesondere Saatgut und/oder Dünger, ist in der Fig.1 gezeigt. Das landwirtschaftliche Arbeitsgerät 10 umfasst hierbei zumindest einen Vorratsbehälter 11 und ein daran angeordnetes Dosieraggregat 12 von dem aus das körnige Gut G in einstellbaren Mengen über eine pneumatische Förderleitung 13 einem Schar 15, insbesondere Scheibenschar, zuführbar ist. Das körnige Gut G ist dabei über ein innerhalb des Scheibenschar 15 angeordnetes Schussrohr 14, insbesondere in definierten Abständen, auf einer landwirtschaftlichen Fläche L ablegbar. Das über eine, vorzugsweise parallelogrammartige, Halterung 16 mit einem Rahmen 17 des landwirtschaftlichen Arbeitsgerätes 10 verbundene Scheibenschar 15 ist hierbei als Doppelscheibenschar ausgebildet und dazu eingerichtet, eine zum Ablegen des körnigen Guts G geeignete Furche innerhalb der landwirtschaftlichen Fläche L auszubilden. Ferner umfasst das landwirtschaftliche Arbeitsgerät 10 zumindest eine weitere Rolle 18, die nach Art einer Tiefenführungsrolle ausgebildet ist und dazu eingerichtet ist, die Furche zumindest teilweise zu verschließen und/oder anzudrücken.

Die Andruckrolle 20 ist in Fahrtrichtung F zwischen dem Scheibenschar 15 und der Tiefenführungsrolle 18 angeordnet und an einem Halter 19, der mit der Halterung 16 und/oder dem Rahmen 17 gekoppelt ist, um eine quer zur Fahrtrichtung F ausgerichtete Achse A drehbar gelagert. Darüber ist der Andruckrolle 20 zumindest ein Abstreifer 30 zugeordnet, der dazu eingerichtet ist, auf dem Andruckelement 23 anhaftende Verschmutzungen zumindest teilweise zu lösen. Bei Überfahrt der landwirtschaftlichen Fläche L in Fahrtrichtung F rollt die, insbesondere als Fangrolle ausgebildete, Andruckrolle 20 auf dem Ackerboden ab. Ein definierter Anpressdruck zwischen der Andruckrolle 20 und dem Boden ist dabei über den Halter 19 und/oder den Rahmen 17 einstellbar. Das körnige Gut G wird während der Überfahrt über das Schussrohr 14 innerhalb der Furche auf der landwirtschaftlichen Fläche L abgelegt und durch die darauf abrollende Andruckrolle 20, in Abhängigkeit des eingestellten Anpressdrucks, in den Ackerboden eingedrückt. Alternativ oder zusätzlich ist die Andruckrolle 20 dazu eingerichtet, die Furche nach dem Andrücken des körnigen Guts G zumindest teilweise wieder zu verschließen, insbesondere mit Teilen des Ackerbodens zu bedecken, und/oder den Ackerboden zumindest teilweise zu verdichten. Darüber hinaus ist die Andruckrolle 20 alternativ oder zusätzlich dazu eingerichtet, dass aus dem Schussrohr 14 geförderte körnige Gut G zumindest teilweise aufzufangen und/oder zur Stabilisierung zumindest teilweise an den Ackerboden anzudrücken.

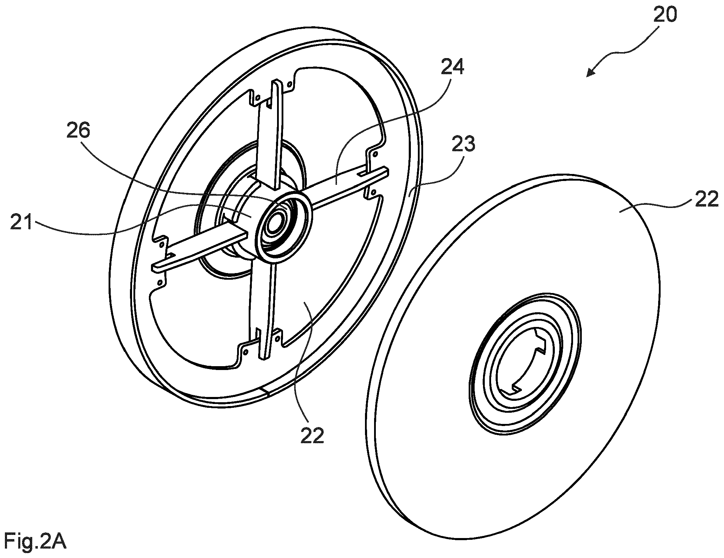

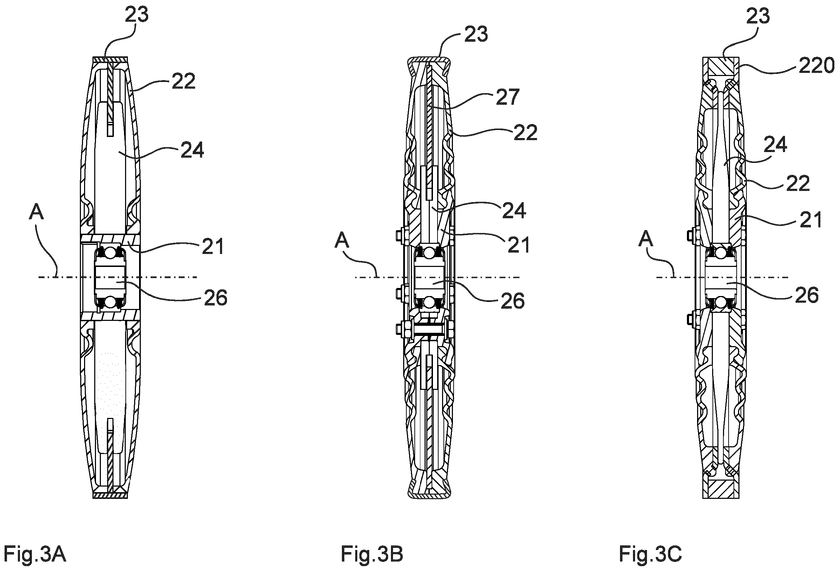

In den Fig.2A und 3A ist die Andruckrolle 20 in der ersten Ausführungsvariante gemäß Fig.1 in verschiedenen Ansichten zu sehen. Die Andruckrolle 20 umfasst neben einem Lager 26 über das ein, insbesondere innerer, Nabenkörper 21 drehbar gelagert ist zumindest einen daran angeordneten mehrteiligen Mantel 22 der den Nabenkörper 21 in radialer Richtung zumindest teilweise umschließt. Der Mantel 22 ist hierbei aus einem elastischen gummiartigen Material ausgebildet und drehfest mit dem Nabenkörper 21 gekoppelt. Ferner umfasst die Andruckrolle 20 ein im Wesentlichen formstabiles, kreisringförmiges und radial umlaufendes Andruckelement 23 das an dem Mantel 22 anschließt. Die Andruckrolle 20 ist dabei auf einer radial von außen an dem Andruckelement 23 angeordneten Lauffläche auf der landwirtschaftlichen Fläche L, insbesondere dem Ackerboden, abrollbar. Innerhalb der Andruckrolle 20 ist zwischen dem Nabenkörper 21 und Andruckelement 23 zumindest ein Führungselement 24 angeordnet. Das Andruckelement 23 und das Führungselement 24 sind dabei in radialer Richtung zueinander verschiebbar, wobei das Führungselement 24 starr und/oder drehfest mit dem Nabenkörper 21 gekoppelt ist.

Das Andruckelement 23 ist somit mittels des Führungselementes 24 während des Abrollvorgangs in axialer Richtung zwangsgeführt. Dabei ragt das mehrteilige Führungselement 24 gemäß der beispielhaften ersten Ausführungsvariante zumindest teilweise um das Andruckelement 23. Die in der Fig.2A gezeigten Führungselemente 24 ragen nach Art mehrerer Speichen ausgehend vom einteiligen Nebenkörper 21 zumindest teilweise in Richtung des Andruckelements 23. Die Führungselemente 24 und das Andruckelement 23 sind hierbei im Wesentlichen formstabil und aus einem metallischen Material ausgebildet, wobei ein formstabiler Kunststoff und/oder Verbundwerkstoff ebenfalls denkbar ist. Das im Querschnitt gesehen zumindest teilweise profilförmig ausgebildete Andruckelement 23 ist in diesem Ausführungsbeispiel als ein aus einem Vollmaterial bestehenden T-Profil ausgeführt, dass einen zumindest teilweise radialen Vorsprung in Richtung des Führungselementes 24 aufweist. Alternativ oder zusätzlich kann das Profil hierbei, insbesondere zur Gewichtseinsparung, hohl ausgebildet sein. Ferner umfasst zumindest eines der Führungselemente 24 zumindest einen, insbesondere schlitzförmigen, Ausschnitt der zumindest teilweise mit einem radialen Vorsprung des Andruckelements 23 korrespondiert. Der mehrteilige, insbesondere zweiteilige, Mantel 22 ist jeweils von einer linken und rechten Seite mit dem Andruckelement 23 und/oder dem Nabenkörper 21 form-, kraft- und/oder stoffschlüssig, insbesondere kraftübertragend, verbunden. Die zumindest teilweise stoffschlüssige Verbindung zwischen dem Mantel 22 und dem Andruckelement 23 und/oder dem Nabenkörper 21 ist hierbei geklebt. Somit ist ein durch das Abrollen der Andruckrolle 20 einleitbare Drehmoment vom Andruckelement 23 über den Mantel 22 zum Nabenkörper 21 zumindest teilweise übertragbar, womit eine Drehbewegung der Andruckrolle 20 um die Achse A infolge des Abrollvorgangs erreicht ist. Darüber hinaus ist das Führungselement 24 zum Schutz vor äußeren Einflüssen und/oder Verschmutzungen zumindest teilweise, insbesondere in axialer Richtung, vom Mantel 22 umschlossen.

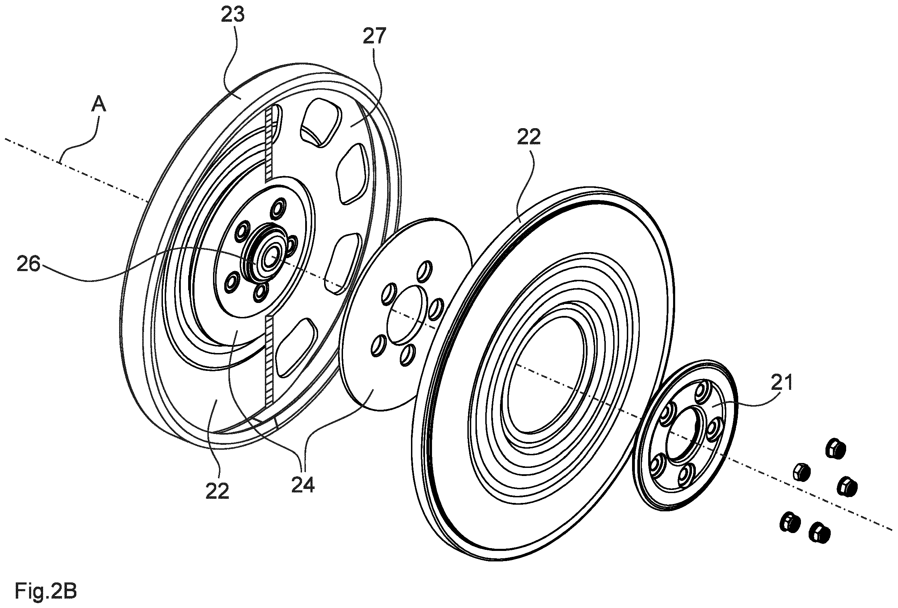

Die Fig.2B und 3B zeigen eine zweite Ausführungsvariante der erfindungsgemäßen Andruckrolle 20. Die gleichen Teile wurden hierbei mit gleichen Bezugsziffern gekennzeichnet. Die Ausführungsvarianten entsprechen dem Erfindungsgedanken und sind somit zumindest teilweise gleichartig ausgebildet, wobei im Folgenden im Wesentlichen auf die Unterschiede eingegangen werden soll. Das Führungselement 24 ist hierbei als zweiteilige Scheibe ausgebildet die mittels zumindest einer Schraubverbindung mit dem zweiteiligen Nabenkörper 21 verbunden ist. Hierbei ist der Nabenkörper 21 von außen an dem Führungselement 24 angeordnet. Das Andruckelement 23 ist zumindest teilweise u- bzw. c-profilförmig ausgebildet, wobei die seitlichen Schenkel des Andruckelementes 23 derartig umformbar sind, dass ein, insbesondere mittig, zwischen der linken und rechten Mantelhälfte angeordnetes Stützorgan 27 vom Andruckelement 23 und/oder einer ersten Seite des Mantels 22, insbesondere form- und/oder kraftschlüssig, eingeklemmt ist. Das Stützorgan 27 ist hierbei scheibenförmig ausgebildet und in radialer Richtung zwischen dem Führungselement 24 und dem Andruckelement 23 angeordnet, wobei das Stützorgan 27 zumindest teilweise einen von den beiden Hälften des Führungselementes 24 gebildeten schlitzförmigen Ausschnitt hineinragt und/oder vom Führungselement 24 in axialer Richtung zwangsgeführt ist. Darüber hinaus ist der zumindest eine Mantel 22 auf einer zweiten Seite in Form einer drehmomentübertragenden Klemmverbindung zwischen dem Nabenkörper 21 und dem Führungselement 24 angeordnet.

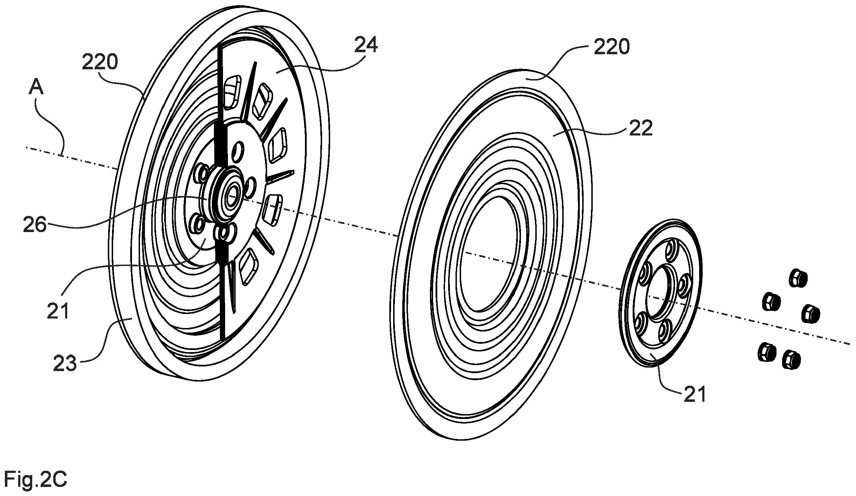

Die Fig.2C und 3C zeigen eine dritte Ausführungsvariante der erfindungsgemäßen Andruckrolle 20. Die gleichen Teile wurden hierbei mit gleichen Bezugsziffern gekennzeichnet. Die Ausführungsvarianten entsprechen dem Erfindungsgedanken und sind somit zumindest teilweise gleichartig ausgebildet, wobei im Folgenden im Wesentlichen auf die Unterschiede eingegangen werden soll. Das Führungselement 24 ist hierbei als einteilige Scheibe ausgebildet die mittels zumindest einer Schraubverbindung zwischen dem zweiteiligen Nabenkörper 21 angeordnet ist. Das Andruckelement 23 ist zumindest teilweise als ein aus einem Vollmaterial gebildeten rechteckförmigen Profil ausgebildet, wobei hierbei ein Hohlprofil ebenfalls denkbar ist. Zumindest ein an dem Andruckelement 23 umlaufender formstabiler Stützring 220 dient hierbei als drehmomentübertragende Kopplung zwischen dem Andruckelement 23 und dem Mantel 22. Gemäß der beispielhaften Ausführungsvariante ist jeweils ein Stützring 220, insbesondere von außen, an den beiden Seiten des Andruckelementes 23 angeordnet. Der Stützring 220 ist hierbei zumindest teilweise mittels einer stoffschlüssigen Verbindung, beispielsweise einer Klebe- und/oder Schweißverbindung, und/oder zumindest einer Schraubverbindung mit dem Andruckelement 23 verbunden. Der Mantel 22 ist hierbei zumindest teilweise an dem Stützring 220 angeformt und/oder mit diesem gekoppelt. Der Stützring 220 ragt dabei ausgehend vom Andruckelement 23 radial zumindest teilweise in Richtung des Führungselementes 24 und/oder des Nabenkörpers 21. Die beiden Stützringhälften 220 bilden hierbei einen zumindest teilweise schlitzförmigen Ausschnitt in den das einteilige Führungselement 24 zumindest teilweise eingreift. Somit ist das Andruckelement 23 und/oder der Stützring 220 vom Führungselement 24, insbesondere in axialer Richtung, zwangsgeführt.

Ferner ist eine nicht gezeigte Ausführungsvariante denkbar, bei der zwischen dem Führungselement 24 und/oder dem Andruckelement 23 zumindest ein, insbesondere aus einem elastischen Material und/oder nach Art einer Schraubenfeder ausgebildetes, Federelement angeordnet ist. Alternativ oder zusätzlich ist außerdem zumindest ein Federelement zwischen dem Nabenkörper 21 und dem Führungselement 24 einsetzbar. Darüber hinaus sind weitere Profilformen des Andruckelementes 23, wie beispielsweise kreisring- und/oder polygonförmige Profile, vorstellbar.

### Bezugszeichenliste

- 10: landwirtschaftliches Arbeitsgerät
- 11: Vorratsbehälter
- 12: Dosieraggregat
- 13: pneumatische Förderleitung
- 14: Schussrohr
- 15: Schar, Scheibenschar
- 16: Halterung
- 17: Rahmen
- 18: Rolle, Tiefenführungsrolle
- 19: Halter
- 20: Andruckrolle, Fangrolle
- 21: Nabenkörper
- 22: Mantel
- 220: Stützring
- 23: Andruckelement
- 24: Führungselement
- 26: Lager
- 27: Stützorgan
- 30: Abstreifer

- A: Achse
- F: Fahrtrichtung
- G: körniges Gut
- L: landwirtschaftliche Fläche

## Patentansprüche

1. Andruckrolle (20) für ein landwirtschaftliches Arbeitsgerät (10), insbesondere Verteilmaschine, zum Andrücken von körnigem Gut (G), insbesondere Saatgut und/oder Dünger, auf einer landwirtschaftlichen Fläche (L) umfassend, wenigstens ein drehbar gelagerter, insbesondere innerer, Nabenkörper (21), wenigstens ein den Nabenkörper (21) zumindest teilweise umschließender , Mantel (22), wobei der Mantel (22) zumindest nahezu drehfest mit dem Nabenkörper (21) gekoppelt ist, und zumindest ein im Wesentlichen formstabiles radial umlaufendes, insbesondere kreisringförmiges, Andruckelement (23), wobei der wenigstens eine Mantel (22) zumindest teilweise an dem zumindest einen Andruckelement (23) anschließt, und wobei die Andruckrolle (20), insbesondere in radialer Richtung, zwischen dem Nabenkörper (21) und dem Andruckelement (23) zumindest ein Führungselement (24) aufweist, wobei das Führungselement (24) und das Andruckelement (23), insbesondere in radialer Richtung, zueinander verschiebbar sind, wobei das Führungselement (24), insbesondere in axialer Richtung, zumindest teilweise von dem zumindest einen Mantel (22), welcher elastisch ausgebildet ist, umschlossen ist.

2. Andruckrolle (20) nach Anspruch 1, **dadurch gekennzeichnet, dass** das Führungselement (24) starr, insbesondere drehfest, mit dem Nabenkörper (21) gekoppelt ist.

3. Andruckrolle (20) nach zumindest einem der vorgenannten Ansprüche,
**dadurch gekennzeichnet, dass** das Führungselement (24) zumindest teilweise in und/oder um das Andruckelement (23) ragt, dass das Andruckelement (23) durch das Führungselement (24), insbesondere in axialer Richtung, zwangsgeführt ist.

4. Andruckrolle (20) nach zumindest einem der vorgenannten Ansprüche,
**dadurch gekennzeichnet, dass** das Führungselement (24) zumindest teilweise scheibenförmig ausgebildet ist.

5. Andruckrolle (20) nach zumindest einem der Ansprüche 1-3,
**dadurch gekennzeichnet, dass** das Führungselement (24) zumindest teilweise speichenartig ausgebildet ist.

6. Andruckrolle (20) nach zumindest einem der vorgenannten Ansprüche,
**dadurch gekennzeichnet, dass** das Führungselement (24) im Wesentlichen formstabil, insbesondere aus einem metallischen Material und/oder aus Kunststoff, ausgebildet ist.

7. Andruckrolle (20) nach zumindest einem der vorgenannten Ansprüche,
**dadurch gekennzeichnet, dass** das Andruckelement (23) zumindest teilweise aus einem metallischen Material und/oder aus einem Verbundwerkstoff ausgebildet ist.

8. Andruckrolle (20) nach zumindest einem der vorgenannten Ansprüche,
**dadurch gekennzeichnet, dass** der Nabenkörper (21) und/oder das Führungselement (24) und/oder der Mantel (22) jeweils mehrteilig, vorzugsweise zweiteilig, ausgebildet sind.

9. Andruckrolle (20) nach zumindest einem der vorgenannten Ansprüche,
**dadurch gekennzeichnet, dass** der zumindest eine Mantel (22) form- und/oder kraft- und/oder stoffschlüssig, insbesondere drehmomentübertragend, mit dem Andruckelement (23) und/oder dem Nabenkörper (21) verbunden ist.

10. Andruckrolle (20) nach zumindest einem der vorgenannten Ansprüche,
**dadurch gekennzeichnet, dass** das Andruckelement (23) zumindest teilweise im Querschnitt gesehen ein, insbesondere U- und/oder T-, Profil ausbildet.

11. Andruckrolle (20) nach zumindest einem der vorgenannten Ansprüche,
**dadurch gekennzeichnet, dass** die Andruckrolle (20) zumindest ein Stützorgan (27), das zwischen dem zumindest einen Führungselement (24) und dem Andruckelement (23) angeordnet ist, umfasst, wobei das Stützorgan (27) form- und/oder kraftschlüssig, insbesondere mittels einer Klemmverbindung, mit dem zumindest einen Mantel (22) und/oder dem Andruckelement (23) verbunden ist.

12. Andruckrolle (20) nach zumindest einem der vorgenannten Ansprüche,
**dadurch gekennzeichnet, dass** zwischen dem Führungselement (24) und dem Andruckelement (23) zumindest ein Federelement angeordnet ist.

13. Landwirtschaftliches Arbeitsgerät (10), insbesondere Verteilmaschine, zum Ausbringen von körnigem Gut (G), insbesondere Saatgut und/oder Dünger, auf einer landwirtschaftlichen Fläche (L) umfassend, wenigstens ein zumindest teilweise in den Boden eingreifendes Schar (15), insbesondere Scheibenschar, zumindest eine Förderleitung (13) zum Fördern von körnigem Gut (G) die dem zumindest einen Schar (15) zugeordnet ist, wenigstens eine an einem Halter (19) drehbar gelagerte Andruckrolle (20), wobei die Andruckrolle (20) in Fahrtrichtung (F) hinter dem Schar (15) angeordnet und dazu eingerichtet ist, dass mittels dem Schar (15) ablegbare körnige Gut (G) zumindest teilweise anzudrücken, **dadurch gekennzeichnet, dass** die Andruckrolle (20) nach zumindest einem der vorstehenden Ansprüche ausgebildet ist.

## Claims

1. Pressure roller (20) for agricultural equipment (10), in particular a distribution machine, for pressing granular material (G), in particular seed and/or fertilizer, onto an agricultural area (L), the roller comprising at least one rotatably mounted, in particular inner, hub shell (21), at least one casing (22) which at least partially surrounds the hub shell (21), wherein the casing (22) is coupled to the hub shell (21) at least for approximately conjoint rotation, and at least one substantially dimensionally stable radially circumferential, in particular annular, pressure element (23), wherein the at least one casing (22) at least partially adjoins the at least one pressure element (23), and wherein the pressure roller (20), in particular in the radial direction, has at least one guide element (24) between the hub shell (21) and the pressure element (23), wherein the guide element (24) and the pressure element (23), in particular in the radial direction, can be moved relative to one another, wherein the guide element (24), in particular in the axial direction, is at least partially surrounded by the at least one casing (22), which is designed to be elastic.

2. Pressure roller (20) according to claim 1, **characterized in that** the guide element (24) is rigidly coupled to the hub shell (21), in particular for conjoint rotation.

3. Pressure roller (20) according to at least one of the preceding claims,
**characterized in that** the guide element (24) extends at least partially into and/or around the pressure element (23), **in that** the pressure element (23) is positively guided by the guide element (24), in particular in the axial direction.

4. Pressure roller (20) according to at least one of the preceding claims,
**characterized in that** the guide element (24) is at least partially disk-shaped.

5. Pressure roller (20) according to at least one of claims 1-3,
**characterized in that** the guide element (24) is at least partially designed like a spoke.

6. Pressure roller (20) according to at least one of the preceding claims,
**characterized in that** the guide element (24) is substantially dimensionally stable, in particular is made of a metal material and/or plastics material.

7. Pressure roller (20) according to at least one of the preceding claims,
**characterized in that** the pressure element (23) is made at least partially from a metal material and/or from composite material.

8. Pressure roller (20) according to at least one of the preceding claims,
**characterized in that** the hub shell (21) and/or the guide element (24) and/or the casing (22) are each in multiple parts, preferably in two parts.

9. Pressure roller (20) according to at least one of the preceding claims,
**characterized in that** the at least one casing (22) is form-fittingly and/or frictionally and/or integrally connected to the pressure element (23) and/or the hub shell (21), in particular in a torque-transmitting manner.

10. Pressure roller (20) according to at least one of the preceding claims,
**characterized in that** the pressure element (23) forms a profile, in particular a U- and/or T-profile, at least partially when viewed in cross-section.

11. Pressure roller (20) according to at least one of the preceding claims,
**characterized in that** the pressure roller (20) comprises at least one support member (27) which is arranged between the at least one guide element (24) and the pressure element (23), wherein the support member (27) is form-fittingly and/or frictionally connected to the at least one casing (22) and/or the pressure element (23), in particular by means of a clamping connection.

12. Pressure roller (20) according to at least one of the preceding claims,
**characterized in that** at least one spring element is arranged between the guide element (24) and the pressure element (23).

13. Agricultural equipment (10), in particular a distribution machine, for spreading granular material (G), in particular seed and/or fertilizer, on an agricultural area (L), comprising at least one plowshare (15), in particular a disk plowshare, which at least partially engages in the ground, at least one conveyor line (13) for conveying granular material (G) which is assigned to the at least one plowshare (15), at least one pressure roller (20) which is rotatably mounted on a holder (19), wherein the pressure roller (20) is arranged behind the plowshare (15) in the direction of travel (F) and is designed to at least partially press down granular material (G) which can be deposited by means of the plowshare (15), **characterized in that** the pressure roller (20) is designed according to at least one of the preceding claims.

## Revendications

1. Rouleau presseur (20) pour un outil de travail agricole (10), en particulier un épandeur, permettant de presser un article granuleux (G), en particulier des semences et/ou de l'engrais, sur une surface agricole (L), comprenant au moins un corps formant moyeu (21), en particulier intérieur, monté rotatif, au moins une enveloppe (22) entourant au moins partiellement le corps formant moyeu (21), dans lequel l'enveloppe (22) est accouplée au moins de manière pratiquement solidaire en rotation au corps formant moyeu (21), et au moins un élément presseur (23) sensiblement indéformable, radialement circonférentiel, en particulier en forme d'anneau de cercle, dans lequel l'au moins une enveloppe (22) est reliée au moins partiellement à l'au moins un élément presseur (23), et dans lequel le rouleau presseur (20) présente, en particulier dans la direction radiale, entre le corps formant moyeu (21) et l'élément presseur (23), au moins un élément de guidage (24), dans lequel l'élément de guidage (24) et l'élément presseur (23) peuvent être coulissés l'un par rapport à l'autre, en particulier dans la direction radiale, dans lequel l'élément de guidage (24) est entouré, en particulier dans la direction axiale, au moins partiellement par l'au moins une enveloppe (22) qui est réalisée de manière élastique.

2. Rouleau presseur (20) selon la revendication 1, **caractérisé en ce que** l'élément de guidage (24) est accouplé de manière rigide, en particulier de manière solidaire en rotation, au corps formant moyeu (21).

3. Rouleau presseur (20) selon au moins l'une des revendications précédentes, **caractérisé en ce que** l'élément de guidage (24) fait saillie au moins partiellement dans et/ou autour de l'élément presseur (23), de sorte que l'élément presseur (23) est guidé de manière forcée par l'élément de guidage (24), en particulier dans la direction axiale.

4. Rouleau presseur (20) selon au moins l'une des revendications précédentes, **caractérisé en ce que** l'élément de guidage (24) est réalisé au moins partiellement en forme de disque.

5. Rouleau presseur (20) selon au moins l'une des revendications 1 à 3, **caractérisé en ce que** l'élément de guidage (24) est réalisé au moins partiellement à la manière de rayons.

6. Rouleau presseur (20) selon au moins l'une des revendications précédentes, **caractérisé en ce que** l'élément de guidage (24) est sensiblement indéformable, en particulier réalisé en un matériau métallique et/ou en une matière plastique.

7. Rouleau presseur (20) selon au moins l'une des revendications précédentes, **caractérisé en ce que** l'élément presseur (23) est réalisé au moins partiellement en un matériau métallique et/ou en un matériau composite.

8. Rouleau presseur (20) selon au moins l'une des revendications précédentes, **caractérisé en ce que** le corps formant moyeu (21) et/ou l'élément de guidage (24) et/ou l'enveloppe (22) sont respectivement réalisés en plusieurs parties, de préférence en deux parties.

9. Rouleau presseur (20) selon au moins l'une des revendications précédentes, **caractérisé en ce que** l'au moins une enveloppe (22) est reliée à l'élément presseur (23) et/ou au corps formant moyeu (21) par complémentarité de forme et/ou de force et/ou de matière, en particulier par transmission de couple de rotation.

10. Rouleau presseur (20) selon au moins l'une des revendications précédentes, **caractérisé en ce que** l'élément presseur (23) réalise au moins partiellement, vu dans la section transversale, un profil, en particulier en U et/ou en T.

11. Rouleau presseur (20) selon au moins l'une des revendications précédentes, **caractérisé en ce que** le rouleau presseur (20) comprend au moins un organe d'appui (27) qui est disposé entre l'au moins un élément de guidage (24) et l'élément presseur (23), dans lequel l'organe d'appui (27) est relié par complémentarité de forme et/ou de force, en particulier au moyen d'une liaison par serrage, à l'au moins une enveloppe (22) et/ou à l'élément presseur (23).

12. Rouleau presseur (20) selon au moins l'une des revendications précédentes, **caractérisé en ce qu'au** moins un élément formant ressort est disposé entre l'élément de guidage (24) et l'élément presseur (23).

13. Outil de travail agricole (10), en particulier épandeur, permettant d'épandre des articles granuleux (G), en particulier des semences et/ou de l'engrais, sur une surface agricole (L), comprenant au moins un soc (15), en particulier un soc à disques, pénétrant au moins partiellement dans le sol, au moins une conduite de transport (13) pour le transport des articles granuleux (G), laquelle est associée à l'au moins un soc (15), au moins un rouleau presseur (20) monté rotatif sur un élément de maintien (19), dans lequel le rouleau presseur (20) est disposé derrière le soc (15) dans le sens de la marche (F) et est conçu pour presser au moins partiellement l'article granuleux (G) pouvant être déposé au moyen du soc (15), **caractérisé en ce que** le rouleau presseur (20) est réalisé selon au moins l'une des revendications précédentes.
